# FASCICULE DE BREVET EUROPEEN

(11) **EP 3 599 563 B1**
(45) Date de publication et mention de la délivrance du brevet: **29.12.2021**
(21) Numéro de dépôt: 19187841.2
(22) Date de dépôt: 23.07.2019
(51) Int. Cl.: G06F 21/34, G06Q 20/34, G06Q 20/36, G06Q 20/38, G06Q 20/40, H04L 9/32, H04L 29/06, G06F 21/44, H04L 9/08

(54) **PROCÉDÉ D'AFFICHAGE D'UN CODE D'AUTHENTIFICATION PAR UN DISPOSITIF ÉLECTRONIQUE AVEC SÉLECTION DE MODE D'AFFICHAGE, PROCÉDÉ DE GESTION, DISPOSITIFS ET SERVEURS ASSOCIÉS**
ANZEIGEVERFAHREN EINES AUTHENTIFIZIERUNGSCODES MITHILFE EINES ELEKTRONISCHEN GERÄTS MIT AUSWAHL DES ANZEIGEMODUS, VERWALTUNGSVERFAHREN, ENTSPRECHENDE VORRICHTUNGEN UND SERVER
METHOD FOR DISPLAYING AN AUTHENTICATION CODE BY AN ELECTRONIC DEVICE WITH SELECTION OF DISPLAY MODE, MANAGEMENT METHOD, ASSOCIATED DEVICES AND SERVERS

(30) Priorité: 26.07.2018 FR 1856957
(43) Date de publication de la demande: 29.01.2020
(73) Titulaire: IDEMIA France, 92400 Courbevoie (FR)
(72) Inventeur: LESEIGNEUR, Gilles, 92700 COLOMBES (FR); COHEN-HADRIA, Igal, 92700 COLOMBES (FR)
(74) Mandataire: Cabinet Beau de Loménie

(56) Documents cités:
- US-A1- 2008 029 607
- US-B1- 8 393 545
- US-B1- 10 026 078

## Description

La présente invention concerne l'affichage d'un code d'authentification par un dispositif électronique.

L'invention concerne plus particulièrement l'affichage des codes d'authentifications parfois appelés codes d'authentification dynamiques.

De tels codes peuvent être utilisés dans des dispositifs électroniques tels que des cartes bancaires ou encore des jetons d'authentifications.

Lorsque l'on utilise une carte bancaire pour effectuer des transactions financières à distance (sur internet ou par téléphone), il existe des risques de fraudes qui sont plus importants que lorsque l'utilisateur se présente dans un point de vente avec sa carte bancaire. Il a donc été proposé de demander aux utilisateurs de saisir un code appelé code CW (« Card Vérification Value » en langue anglaise) pour authentifier les transactions et indiquer que l'utilisateur est bien en possession de la carte bancaire. Dans la technique antérieure, les codes CW étaient statiques et ils étaient imprimés au-dos de la carte bancaire. Comme on peut le concevoir, cette solution n'est pas suffisamment sécurisée.

Il a donc été proposé d'équiper les cartes bancaires d'écrans sur lesquels on peut afficher des codes d'authentifications appelés CW dynamiques. Les codes CW dynamiques changent régulièrement, par exemple toutes les heures. Du côté du serveur qui va authentifier la transaction, on actualise également régulièrement le code d'authentification qui sera associé à la carte bancaire pour que les transactions puissent se réaliser.

Différents problèmes se posent lorsque l'on utilise des cartes avec affichage de codes CW dynamiques.

Les cartes bancaires qui délivrent des codes CW dynamiques sont des dispositifs électroniques complexes, car ces cartes bancaires comportent toutes un microcircuit, un écran, une batterie qui peut alimenter l'écran, et enfin une horloge qui va servir à actualiser le code CW dynamique (de manière synchrone avec le serveur). Il existe un risque qu'un ou plusieurs de ces éléments soient défaillants.

Par exemple, en cas d'une défaillance de l'horloge de la carte bancaire, la carte délivrera des codes d'authentifications qui ne sont pas synchronisés avec ceux du serveur utilisé pour authentifier les transactions. En cas de défaillance de la batterie, l'écran ne pourra pas afficher de nouveaux codes d'authentifications. La carte bancaire devient donc inutilisable.

L'utilisateur, le fabricant de la carte bancaire, et les entités émettrices de ces cartes (typiquement les banques) n'ont aucune information sur ces défaillances. Un utilisateur dont la carte est défaillante va demander un changement de carte, mais la cause de la défaillance de la carte ne sera généralement pas étudiée. Les fabricants de carte bancaire et les sociétés émettrices de ces cartes ont donc pris l'habitude de remplacer régulièrement ces cartes, par exemple, après une période de deux ans, cette période correspondant à une durée de vie normale d'une batterie. On comprend que les serveurs d'authentifications n'ont pas accès à des informations sur le fonctionnement de la carte. Il existe donc un besoin pour la fourniture d'information relative à l'état des cartes bancaires, pour pouvoir mieux gérer une flotte de cartes bancaires.

D'autres problèmes se posent pendant l'utilisation de dispositifs électroniques affichant des codes CW dynamiques.

Certaines de ces cartes bancaires sont équipées de plusieurs applications de paiement. Par exemple, dans une carte bancaire, une application de paiement peut être liée à une somme d'argent prépayée tandis qu'une autre application de paiement peut être directement liée à un compte bancaire.

Pour choisir l'application à utiliser pour une transaction de paiement, l'utilisateur peut utiliser un terminal de paiement équipé d'une interface, ou encore une interface située sur le dispositif électronique. Cette interface peut comporter un ou plusieurs boutons agencés directement au sein de la carte bancaire.

Une fois manipulée pour choisir une application, la carte n'indique pas quelle est l'application qui a été choisie ou quelle est l'application qui génère le code d'authentification affiché par la carte.

Cela rend parfois peu pratique l'utilisation de telles cartes.

Pour ces cartes, on fait face au même problème de communication d'informations à l'utilisateur, au fabricant de carte, ou encore à l'entité émettrice.

De l'état de la technique antérieure, on connaît aussi des jetons d'authentifications qui sont utilisés pour authentifier des utilisateurs sur internet. Ces jetons d'authentifications pourront par exemple être utilisés pour accéder à des services, par exemple des services de messagerie. Les jetons d'authentification peuvent également être équipés de plusieurs applications. Par exemple, ces jetons d'authentification peuvent contenir une application qui génère des codes d'authentification et une application qui génère des codes d'authentification à partir d'un code préalablement saisi sur le jeton (ce type d'application est utilisé pour l'authentification dite mutuelle). De l'état de la technique antérieur on connait aussi les documents US 10 026 078 et US 2008/029607.

Les problèmes mentionnés ci-dessus qui se posent pour les cartes bancaires se posent également pour les jetons d'authentifications. En d'autres termes, ces problèmes se posent pour les dispositifs électroniques configurés pour afficher des codes d'authentification.

### Objet et résumé de l'invention

Pour résoudre les problèmes mentionnés ci-dessus, la présente invention propose un procédé d'affichage d'un code d'authentification mis en œuvre par un dispositif électronique, le procédé comprenant :
- une obtention dudit code d'authentification,
- une détection d'un état prédéfini du dispositif électronique,
- une sélection parmi plusieurs modes d'affichage, d'un mode d'affichage du code d'authentification associé à l'état prédéfini détecté, et
- un affichage du code d'authentification selon le mode d'affichage sélectionné au moyen d'un module d'affichage du dispositif électronique.

Dans l'invention, le dispositif peut afficher des codes d'authentification selon plusieurs modes d'affichage qui sont tous différents entre eux.

Ce dispositif électronique peut être associé à un utilisateur. Le code d'authentification peut alors servir à l'authentification de l'utilisateur ou au moins de son dispositif électronique.

Ainsi, une inspection visuelle du dispositif électronique peut indiquer à une personne ayant connaissance des différents modes d'affichages et des états prédéfinis qui leurs sont associés que le dispositif électronique se trouve dans un état prédéfini.

L'information devient alors accessible à l'utilisateur mais également indirectement à l'entité émettrice du dispositif ou au fabricant du dispositif : ces derniers peuvent demander à l'utilisateur quel mode d'affichage est utilisé pour afficher le code d'authentification et ainsi en déduire que le dispositif électronique est dans un état prédéfini.

En outre, en ne modifiant que le mode d'affichage, on affiche toujours le code d'authentification ce qui laisse l'utilisateur utiliser ce code pour réaliser tout type d'authentification.

Selon un mode de réalisation particulier, la détection d'un état prédéfini du dispositif comporte une détection d'au moins un état prédéfini du dispositif électronique parmi une pluralité d'états prédéfinis, chaque état prédéfini étant associé à un mode d'affichage desdits plusieurs modes d'affichage.

On peut noter que selon les états prédéfinis de la pluralité, il peut être possible que plusieurs états prédéfinis soient détectés simultanément. Par exemple, si deux états prédéfinis (ou plus) ont été détectés simultanément, alors on peut utiliser un mode d'affichage associé à l'un des deux états ou encore un autre mode d'affichage.

Par exemple, le procédé peut comporter la détection de plusieurs états prédéfinis du dispositif électronique, l'étape de sélection d'un mode d'affichage comprenant alors la sélection d'un mode d'affichage du code d'authentification associé auxdits plusieurs états prédéfinis.

Selon un mode particulier de mise en œuvre, au moins un état prédéfini indique que le dispositif est configuré pour utiliser une application propre à l'état prédéfini.

Une telle application peut être exécutée par le dispositif électronique, par exemple pour mettre en œuvre des transactions (de paiement ou d'authentification, typiquement). Plusieurs applications peuvent également être exécutées par le dispositif électronique, chacune de ces applications peut être associée à un état prédéfini différent et à un mode d'affichage différent.

Par exemple, si le dispositif électronique est une carte bancaire, des états prédéfinis peuvent alors être associés à des applications de paiement différentes, et par conséquent, chacune de ces applications est également associée à un mode d'affichage.

Selon un mode particulier de mise en oeuvre, on détecte un événement déclenchant une sélection d'une application propre à un état prédéfini,
le procédé étant en outre mis en œuvre lorsque ledit événement est détecté.

Ainsi, lorsque l'événement est déclenché, on va notamment détecter un état prédéfini (propre à l'application sélectionnée) et sélectionner un mode d'affichage.

L'événement peut être la pression d'un bouton du dispositif électronique, ou la réception d'une commande. Cette commande peut être émise par un lecteur qui coopère avec le dispositif électronique (de type terminal de paiement), ou émise par un terminal de type ordiphone ou smartphone (par exemple par communication NFC), ou encore par un ordinateur.

Selon un mode particulier de mise en œuvre, le dispositif électronique est muni d'un bouton, la pression du bouton déclenchant une sélection d'une application propre à un état prédéfini,
le procédé étant en outre mis en œuvre lorsque ladite pression du bouton est détectée.

Dans ce mode particulier de mise en oeuvre, l'événement détecté est la pression du bouton.

Selon un mode particulier de mise en oeuvre, préalablement à son affichage, on obtient le code d'authentification par application à un code d'authentification actuel d'une fonction prédéfinie associée à l'état prédéfini qui a été détecté.

Dans ce mode particulier de mise en oeuvre, le code d'authentification peut être utilisé pour une authentification ultérieure de l'utilisateur avec par exemple un serveur. Le serveur attendra par exemple le code d'authentification actuel pour authentifier l'utilisateur, mais, si un code d'authentification a été modifié, le serveur peut le détecter et donc obtenir une information sur l'état du dispositif électronique.

On peut noter qu'il est possible d'appliquer une fonction prédéfinie y compris lorsque le dispositif électronique présente un fonctionnement dit normal.

Le serveur peut donc déterminer que c'est un code d'authentification modifié qui a été saisi, et il pourra ainsi détecter que le dispositif électronique se trouve dans l'état prédéfini qui a été détecté.

Bien entendu, l'invention n'est nullement limitée à la saisie de code d'authentification sur des interfaces de serveur. Elle trouve application dans la fourniture de codes d'authentification qui peuvent être saisis sur n'importe quelle interface.

Selon un mode particulier de mise en œuvre, le code d'authentification comprend une chaîne de caractères (lettres, chiffres, signes ou symboles ou un mélange de plusieurs de ces types de caractère).

Selon un mode particulier de mise en oeuvre, chaque mode d'affichage est défini par au moins un paramètre choisi dans la liste de paramètres comprenant : souligné, barré, orienté selon une orientation choisie, coloré d'une couleur choisie, sur couleur de fond choisie, d'une police choisie, en italique, en gras.

Ces paramètres sont avantageux car ils n'affectent pas la lisibilité du code d'authentification pour l'utilisateur.

Selon un mode particulier de mise en oeuvre, le code d'authentification comprend un code d'authentification unidimensionnel ou bidimensionnel.

Par exemple, le code d'authentification peut être affiché sous la forme d'un code-barres ou d'un QR code.

Selon un mode particulier de mise en oeuvre, chaque mode d'affichage est défini par au moins un paramètre choisi dans la liste de paramètres comprenant : orienté selon une orientation choisie, coloré d'une couleur choisie, sur une couleur de fond choisie.

L'invention propose également un dispositif électronique configuré pour afficher des codes d'authentification, comprenant :
- un module d'obtention d'un code d'authentification,
- un module de détection d'un état prédéfini du dispositif électronique,
- un module de sélection parmi plusieurs modes d'affichage d'un mode d'affichage du code d'authentification associé à l'état prédéfini détecté, et
- un module d'affichage du code d'authentification selon le mode d'affichage sélectionné.

Ce dispositif peut être configuré pour implémenter tous les modes de mise en oeuvre du procédé décrit ci-avant.

L'invention propose également une carte à puce (notamment une carte bancaire) comprenant ce dispositif électronique.

L'invention propose également un jeton d'authentification comprenant ce dispositif électronique.

L'invention propose également un programme d'ordinateur comportant des instructions pour l'exécution des étapes d'un procédé (mis en œuvre par un dispositif électronique) tel que défini ci-avant lorsque ledit programme est exécuté par un ordinateur.

A noter que les programmes d'ordinateur mentionnés dans le présent exposé peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention propose également un support d'enregistrement lisible par un ordinateur sur lequel est enregistré un programme d'ordinateur comprenant des instructions pour l'exécution des étapes d'un procédé (mis en oeuvre par un dispositif électronique) tel que défini ci-avant.

Les supports d'enregistrement (ou d'information) mentionnés dans le présent exposé peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

L'invention propose également un procédé de gestion d'un dispositif électronique mis en œuvre par un serveur, comprenant :
- une demande d'une information relative à un mode d'affichage d'un code d'authentification affiché sur le dispositif électronique,
- une réception de l'information relative à un mode d'affichage d'un code d'authentification du dispositif électronique,
- une détermination d'un état prédéfini du dispositif électronique à partir de ladite information relative à un mode d'affichage reçu.

Ce serveur peut provoquer l'affichage d'une interface sur un terminal de l'utilisateur, par exemple sur un ordiphone (ou smartphone) ou encore sur un ordinateur. Sur cette interface, un utilisateur peut saisir le mode d'affichage du code d'authentification affiché sur son dispositif électronique.

Si le mode d'affichage a été choisi conformément au procédé d'affichage tel que décrit ci-avant, alors le serveur peut déterminer l'état prédéfini dans lequel se trouve le dispositif électronique.

Selon un mode particulier de mise en œuvre, le procédé comprend en outre :
- une obtention d'un code d'authentification actuel du dispositif électronique,
- une réception d'un code d'authentification saisi par un utilisateur,
- une comparaison du code d'authentification actuel avec le code d'authentification saisi par un utilisateur.

Selon un mode particulier de mise en oeuvre, le procédé comprend en outre une détermination supplémentaire de l'état prédéfini du dispositif électronique, si le code d'authentification saisi peut être obtenu par une application, au code d'authentification actuel, d'une fonction prédéfinie associée à l'état prédéfini, ou si le code d'authentification actuel est identique au code d'authentification saisi reçu.

Ainsi, si le code d'authentification a été modifié par le dispositif électronique en fonction de l'état prédéfini qui a été détecté, le serveur peut déduire du code d'authentification cet état prédéfini.

L'invention propose également un serveur de gestion d'un dispositif électronique, comprenant :
- un module de demande d'une information relative à un mode d'affichage d'un code d'authentification affiché sur un dispositif électronique,
- un module de réception de l'information relative à un mode d'affichage d'un code d'authentification du dispositif électronique,
- un module de détermination d'un état prédéfini du dispositif électronique à partir de ladite information relative à un mode d'affichage reçu.

Ce serveur peut mettre en oeuvre toutes les étapes du procédé mis en oeuvre par un serveur tel que décrit ci-avant.

L'invention propose également un programme d'ordinateur comportant des instructions pour l'exécution des étapes d'un procédé mis en œuvre par un serveur tel que défini ci-avant, lorsque ledit programme est exécuté par un ordinateur.

L'invention propose également un support d'enregistrement lisible par un ordinateur sur lequel est enregistré un programme d'ordinateur comprenant des instructions pour l'exécution des étapes d'un procédé mis en oeuvre par un serveur tel que défini ci-avant.

Enfin, l'invention propose un système comprenant un dispositif électronique ou une carte à puce ou un jeton d'authentification tel que défini ci-avant et un serveur tel que défini ci-avant.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente de manière schématique un exemple d'un procédé mis en oeuvre par un dispositif électronique et par un serveur,
- les figures 2A et 2B illustrent une carte bancaire selon un exemple et dans deux états différents,
- les figures 3A et 3B illustrent un jeton d'authentification selon un exemple et dans deux états différents,
- les figures 4A et 4B montrent un dispositif électronique affichant des codes d'authentification bidimensionnels,
- la figure 5 illustre différents modes d'affichage, et
- la figure 6 illustre un serveur.

### Description détaillée de plusieurs modes de réalisation

La présente invention est définie dans les revendications indépendantes 1, 7, 10 et 11 et se rapporte au domaine des dispositifs électroniques qui sont capables d'obtenir des codes d'authentifications et de les afficher pour qu'ils soient lisibles par un utilisateur. Ces codes d'authentifications peuvent par exemple être saisis, après avoir été lus, sur des interfaces de sites internet de serveurs d'authentification en vue de l'authentification de l'utilisateur ou de son dispositif électronique, le dispositif électronique étant associé à un utilisateur.

La présente invention trouve notamment application dans les transactions financières effectuées par des cartes bancaires à distance (par exemple sur internet ou par téléphone).

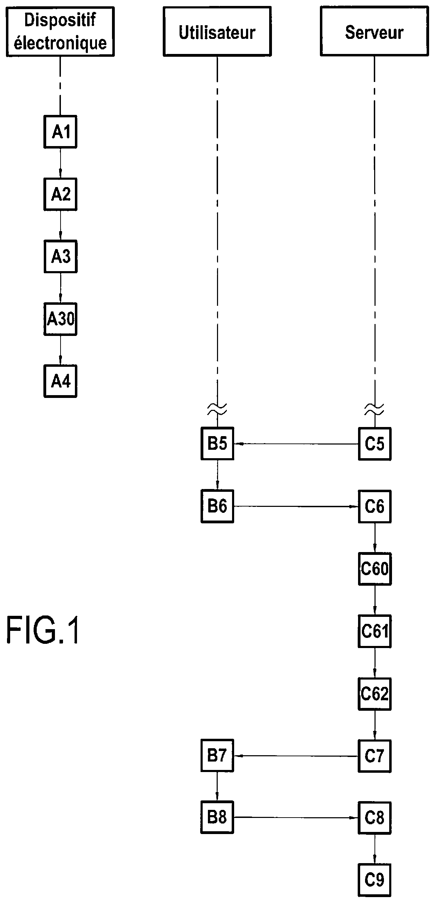

Sur la figure 1 on a représenté schématiquement les étapes d'un procédé d'affichage d'un code d'authentification mis en oeuvre par un dispositif électronique, par exemple une carte bancaire associée à un utilisateur ou un jeton d'authentification associé à un utilisateur, et un procédé de gestion du dispositif électronique mis en oeuvre par un serveur.

Dans une première étape A1, le dispositif électronique obtient un code d'authentification.

Cette étape peut comporter l'application d'une fonction cryptographique qui reçoit en entrée des paramètres du dispositif électronique qui va générer le code pour l'obtenir. Par exemple, dans une carte bancaire, on peut utiliser une information temporelle provenant d'une horloge du dispositif électronique pour générer le code d'authentification.

Une alternative à l'information temporelle peut également être utilisée, et cette alternative peut consister en un nombre d'occurrences d'un événement prédéterminé, par exemple le nombre de fois qu'il y a eu un appui sur le bouton du dispositif depuis la remise dudit dispositif à l'utilisateur.

Le code d'authentification peut comporter une pluralité de caractères, éventuellement uniquement des chiffres, par exemple trois chiffres (comme par exemple un code CVV dynamique).

Dans une étape A2, le dispositif électronique détecte un état prédéfini du dispositif électronique. Par exemple, un état prédéfini peut être choisi dans le groupe comprenant un état de fonctionnement normal, un état dans lequel une batterie du dispositif électronique est défaillante, un état dans lequel une mémoire du dispositif électronique est défaillante, un état dans lequel un module de détermination de l'instant du dispositif électronique est défaillant, et un état dans lequel le dispositif électronique a atteint une valeur de température prédéfinie. Bien entendu l'homme du métier pourra retirer des états de cette liste et/ou y ajouter d'autres états prédéfinis, en fonction de l'application. On notera cependant que cette liste d'états prédéfinis est particulièrement bien adaptée aux dispositifs électroniques de type cartes bancaire. Le module de détermination de l'instant peur être une horloge du dispositif, un bouton (l'instant est une pression de ce bouton), ou encore un capteur qui détecte la réalisation d'un événement.

Aussi, l'état prédéfini peut indiquer qu'une application du dispositif électronique a été sélectionnée (l'état étant alors associé à l'application).

Aussi, plusieurs états prédéfinis peuvent être détectables simultanément. Par exemple, une batterie défaillante et une mémoire défaillante sont deux états qui ne sont pas incompatibles.

Ensuite, au cours d'une étape A3 on peut sélectionner un mode d'affichage associé à l'état prédéfini qui a été détecté au cours de l'étape A2.

Une liste d'associations entre les états prédéfinis et les modes d'affichage peut avoir été élaborée préalablement.

En outre, dans le mode de mise en oeuvre de la figure 1, une étape A30 est mise en oeuvre dans laquelle on applique une fonction prédéfinie au code d'authentification obtenu au cours de l'étape A1 en tenant compte de l'état prédéfini détecté à l'étape A2. Cette fonction prédéfinie va modifier le code d'authentification.

L'invention n'est pas limitée au procédé qui mettent en oeuvre l'étape A30 qui est optionnelle.

Enfin, à l'étape A4, on affiche le code d'authentification selon le mode d'affichage sélectionné sur un module d'affichage du dispositif électronique, par exemple un écran.

On peut noter que les étapes A1 à A4 (éventuellement y compris l'étape optionnelle A30) peuvent être répétées. Par exemple, pour les dispositifs électroniques qui génèrent ou obtiennent des codes d'authentification régulièrement, les étapes A1 à A4 (éventuellement y compris l'étape optionnelle A30) peuvent être mises en oeuvre à chaque obtention d'un code d'authentification (par exemple toutes les heures).

La figure 1 illustre également des étapes qui sont mises en oeuvre postérieurement aux étapes A1 à A4 (éventuellement y compris l'étape optionnelle A30).

A l'étape C5, un serveur avec lequel l'utilisateur et le dispositif électronique mettent en oeuvre une transaction, demande un code d'authentification à l'utilisateur (au moyen d'une interface qui peut être affichée sur un terminal de l'utilisateur).

L'utilisateur lit le code d'authentification à l'étape B5 tel qu'il a été affiché à l'étape A4.

A l'étape B6, l'utilisateur saisit le code d'authentification sur ladite interface, et le serveur reçoit ce code d'authentification à l'étape C6.

Un traitement optionnel peut alors être mis en oeuvre après l'étape C6. A l'étape C60, le serveur obtient un code d'authentification actuel. Ce code d'authentification est le code d'authentification qui doit, en conditions normales pour le dispositif électronique (état dit normal), être affiché sur le dispositif électronique. L'étape C60 peut être mise en oeuvre avant l'étape C6.

Une comparaison (C61) est ensuite mise en oeuvre entre le code d'authentification actuel de l'étape C60 et le code d'authentification saisi par un utilisateur reçu à l'étape C6.

On met ensuite en œuvre l'étape C62 de détermination :
- Si les codes d'authentification sont identiques, alors on détermine que le dispositif électronique est dans un état dit normal.
- Si les codes d'authentification sont différents, et si le code d'authentification saisi peut être obtenu par une application, au code d'authentification actuel, d'une fonction prédéfinie associée à un état prédéfini, alors on détermine que le dispositif électronique est dans cet état prédéfini.Ensuite (mais cela peut être fait avant l'étape C5), le serveur demande (étape C7) le mode d'affichage du code d'authentification, par exemple en montrant les différents modes d'affichages à l'utilisateur.

A l'étape B7, l'utilisateur vérifie ou lit le mode d'affichage du code d'authentification affiché sur son dispositif, puis sélectionne un mode d'affichage sur l'interface (étape B8).

Le serveur reçoit à l'étape C8 une information indiquant quel mode d'affichage a été sélectionné par l'utilisateur puis il traite (étape C9) cette information pour en déduire dans quel état prédéfini est le dispositif électronique. Si les étapes C60 à C62 ont été mises en oeuvre, on peut vérifier si le même état prédéfini a été déterminé. Si tel n'est pas le cas, on peut notamment mettre en oeuvre des traitements de sécurité.

Les étapes A1 à A4 (éventuellement y compris l'étape optionnelle A30) peuvent également être répétées à chaque pression d'un bouton du dispositif qui déclenche l'obtention d'un code d'authentification, ou encore à chaque pression d'un bouton du dispositif qui déclenche la sélection d'une application exécutée par le dispositif électronique. Alternativement, ces étapes peuvent être mises en oeuvre à la détection d'un événement que l'homme du métier saura choisir (par exemple la réception d'une communication).

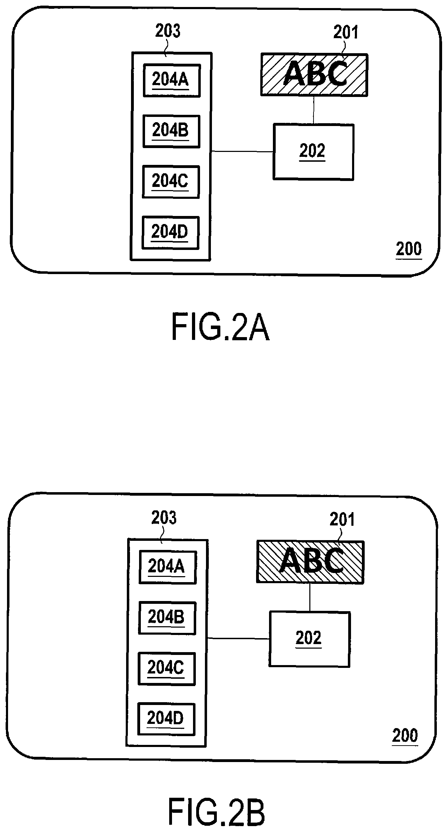

Sur la figure 2A, on a représenté un dispositif électronique 200 de type carte à puce 200, par exemple une carte bancaire.

Ce dispositif comporte un écran 201, par exemple un écran utilisant de l'encre électronique, et sur lequel des codes d'authentification peuvent être affichés.

Pour mettre en oeuvre des procédés selon l'invention et commander l'affichage de l'écran 201, le dispositif 200 comporte un processeur 202 et une mémoire non-volatile 203 qui comporte des instructions de programme d'ordinateur exécutables par le processeur 202.

Plus précisément, la mémoire non-volatile comporte :
- au moins une instruction 204A pour obtenir un code d'authentification,
- au moins une instruction 204B pour détecter un état prédéfini du dispositif électronique,
- au moins une instruction 204C pour sélectionner un mode d'affichage du code d'authentification associé à l'état prédéfini détecté, le mode d'affichage du code d'authentification étant choisi dans une liste de modes d'affichage, et
- au moins une instruction 204D pour afficher le code d'authentification selon le mode d'affichage sélectionné au moyen du module d'affichage du dispositif électronique 201.

Ainsi, les instructions 204A à 204D, lorsqu'elles sont exécutées par le processeur 202, peuvent mettre en œuvre les étapes A1 à A4 (éventuellement y compris l'étape optionnelle A30) décrites en référence à la figure 1.

On notera également que les instructions 204A à 204D et le processeur 202 forment :
- un module d'obtention d'un code d'authentification,
- un module de détection d'un état prédéfini du dispositif électronique,
- un module de sélection parmi une pluralité de modes d'affichage d'un mode d'affichage du code d'authentification associé à l'état prédéfini détecté, et
- un module d'affichage du code d'authentification selon un mode d'affichage sélectionné.

Sur la figure 2B, on a représenté le même dispositif électronique que celui décrit sur la figure 2A, mais avec un mode d'affichage différent. La différence de mode d'affichage est représentée par des hachures différentes au sein de l'écran 201. En fait, un autre état prédéfini a été détecté par le dispositif électronique représenté sur la figure 2B, ce qui conduit à un changement de mode d'affichage.

Le code d'authentification est noté ABC et il est le même sur les deux figures : seul son mode d'affichage change.

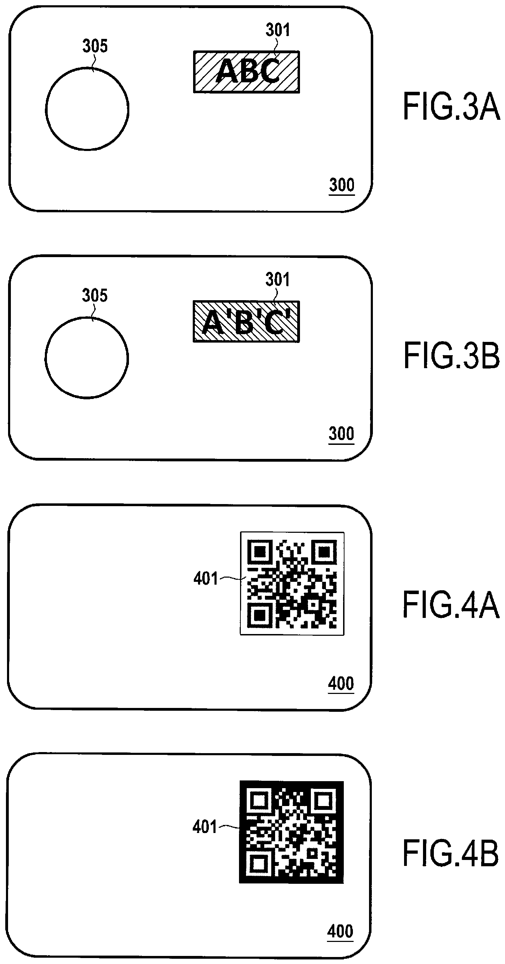

Sur la figure 3A, on a représenté un jeton d'authentification, par exemple un jeton d'authentification utilisé pour accéder à un service en ligne tel qu'un service de messagerie.

Le jeton d'authentification partage les mêmes fonctions que le dispositif électronique décrit en référence aux figures 2A et 2B pour afficher des codes d'authentification sur un écran 301, et il comporte en plus des fonctions additionnelles.

En particulier, le jeton d'authentification comporte un bouton 305 qui va déclencher l'obtention d'un code d'authentification. Notamment, la pression du bouton 305 va déclencher l'exécution des étapes A1 à A4 (éventuellement y compris l'étape optionnelle A30) décrites en référence à la figure 1.

Aussi, lorsqu'un état prédéfini particulier est détecté le jeton d'authentification 300 peut appliquer une fonction prédéfinie à un code d'authentification appelé code d'authentification actuel (par exemple le code d'authentification associé à un état normal).

Ainsi, le code d'authentification ABC représenté à la figure 3A devient A'B'C' dans l'exemple de la figure 3B. En plus de cette modification du code d'authentification, le mode d'affichage a changé (hachures différentes).

Ce mode de réalisation est particulièrement avantageux pour communiquer automatiquement à un serveur ou à un tiers une information sur l'état du dispositif électronique.

Par exemple, un serveur qui attend un code d'authentification actuel mais qui reçoit un code d'authentification qui n'est pas le code d'authentification actuel, peut déduire du code saisi par un utilisateur, qu'il a reçu, l'état prédéfini du dispositif électronique.

La figure 4A illustre un dispositif électronique 400 qui affiche les codes d'authentification sous la forme d'un code bidimensionnel, ici un QR code.

Le dispositif 400 est analogue aux dispositifs 200 et 300 des figures 2A, 2B, 3A et 3B sauf en ce qui concerne son écran 401 (qui est dimensionné pour afficher des codes d'authentification bidimensionnels) et également en ce qu'il comprend un module pour générer un code d'authentification bidimensionnel à partir d'un code d'authentification qui peut être une chaîne de caractères.

En variante, le dispositif 400 pourrait afficher les codes d'authentification sous la forme de codes unidimensionnels, par exemple des code-barres. Le dispositif 400 disposerait alors d'un écran 401 dimensionné pour afficher des codes d'authentification unidimensionnels et comprendrait un module pour générer un code d'authentification unidimensionnel à partir d'un code d'authentification qui peut être une chaine de caractères.

Dans l'exemple de la figure 4A, le code d'authentification bidimensionnel a un mode d'affichage défini par sa couleur noire, et par sa couleur de fond blanche.

Dans l'exemple de la figure 4B, où un autre état a été détecté, les couleurs sont inversées : le code a une couleur blanche et sa couleur de fond est noire.

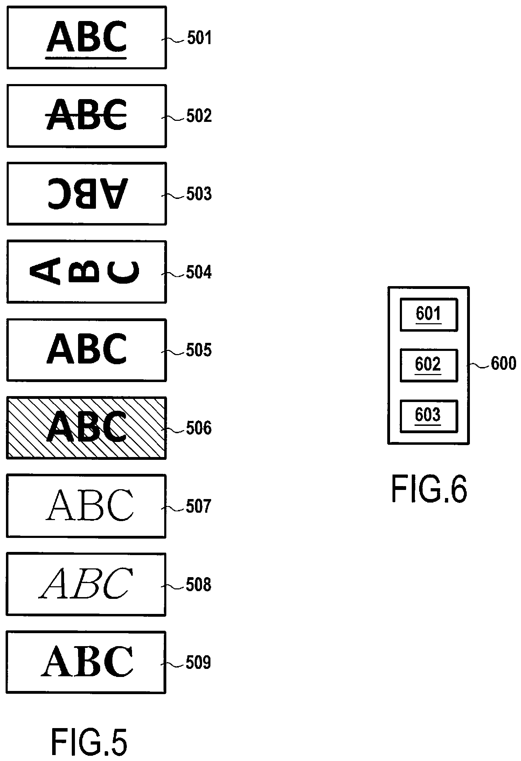

La figure 5 illustre différents modes d'affichages qui peuvent être utilisés pour des codes d'authentification de type chaîne de caractères.

En particulier, on a représenté un code 123456 :
- Souligné (501),
- Barré (502),
- Orienté selon une orientation choisie (503),
- Orienté selon une autre orientation choisie (504),
- Coloré d'une couleur choisie (505),
- Sur couleur de fond choisie (506),
- D'une police choisie (507 - qui diffère de celles utilisés ci-avant),
- En italique (508),
- En gras (509).

On peut noter que certains modes d'affichages peuvent être combinés : ils sont alors parfaitement adaptés pour être associés à des états qui peuvent être détectés simultanément dans un dispositif électronique.

Sur la figure 6, on a représenté un serveur 600 comprenant :
- un module 601 de demande d'une information relative à un mode d'affichage d'un code d'authentification affiché sur un dispositif électronique,
- un module 602 de réception de l'information relative à un mode d'affichage d'un code d'authentification du dispositif électronique,
- un module 603 de détermination d'un état prédéfini du dispositif électronique à partir de ladite information relative à un mode d'affichage reçu.

Ainsi, le module 601 est configuré pour la mise en oeuvre de l'étape C7, le module 602 est configuré pour la mise en oeuvre de l'étape C8, et le module 603 est configure pour la mise en œuvre de l'étape C9.

Les modules 601 à 603 peuvent être réalisés au moyen d'un processeur et d'instructions de programme d'ordinateur stockées dans une mémoire non-volatile du serveur 600.

## Revendications

1. Procédé comprenant un affichage d'un code d'authentification, mis en œuvre par un dispositif électronique, et une gestion de ce dispositif électronique, mise en œuvre par un serveur, le procédé comprenant, par le dispositif électronique :
- une obtention (A1) dudit code d'authentification,
- une détection (A2) d'un état prédéfini du dispositif électronique,
- une sélection (A3) parmi plusieurs modes d'affichage, d'un mode d'affichage du code d'authentification associé à l'état prédéfini détecté, et
- un affichage (A4) du code d'authentification selon le mode d'affichage sélectionné au moyen d'un module d'affichage du dispositif électronique,
le procédé comprenant en outre, par le serveur :
- une demande (C7) d'une information relative au mode d'affichage du code d'authentification affiché sur le dispositif électronique,
- une réception (C8) de l'information relative à un mode d'affichage d'un code d'authentification du dispositif électronique,
- une détermination (C9) de l'état prédéfini du dispositif électronique à partir de ladite information relative au mode d'affichage reçu,
**caractérisé en ce que** le code d'authentification comprend une chaîne de caractères et chaque mode d'affichage est défini par au moins un paramètre choisi dans la liste de paramètres comprenant : souligné, barré, orienté selon une orientation choisie, coloré d'une couleur choisie, sur couleur de fond choisie, d'une police choisie, en italique, en gras.

2. Procédé selon la revendication 1, dans lequel au moins un état prédéfini indique que le dispositif est configuré pour utiliser une application propre à l'état prédéfini.

3. Procédé selon la revendication 2, dans lequel on détecte, par le dispositif électronique, un évènement déclenchant une sélection d'une application propre à un état prédéfini, le procédé étant en outre mis en oeuvre lorsque ledit évènement est détecté.

4. Procédé selon l'une quelconque des revendications 1 à 3, dans lequel préalablement à son affichage, on obtient, par le dispositif électronique, le code d'authentification par application à un code d'authentification actuel d'une fonction prédéfinie associée à l'état prédéfini qui a été détecté.

5. Procédé selon l'une quelconque des revendications 1 à 4, comprenant en outre, par le serveur :
- une obtention (C60) d'un code d'authentification actuel du dispositif électronique,
- une réception (C6) d'un code d'authentification saisi par un utilisateur,
- une comparaison (C61) du code d'authentification actuel avec le code d'authentification saisi par un utilisateur.

6. Procédé selon la revendication 5, comprenant en outre une détermination supplémentaire (C62), par le serveur, de l'état prédéfini du dispositif électronique, si le code d'authentification saisi peut être obtenu par une application, au code d'authentification actuel, d'une fonction prédéfinie associée à l'état prédéfini, ou si le code d'authentification actuel est identique au code d'authentification saisi reçu.

7. Système comprenant un dispositif électronique (200) configuré pour afficher des codes d'authentification, et un serveur, le dispositif électronique comprenant :
- un module (202, 204A) d'obtention d'un code d'authentification,
- un module (202, 204B) de détection d'un état prédéfini du dispositif électronique,
- un module (202, 204C) de sélection parmi plusieurs modes d'affichage, d'un mode d'affichage du code d'authentification associé à l'état prédéfini détecté, et
- un module (202, 204D) d'affichage du code d'authentification selon le mode d'affichage sélectionné,
le serveur comprenant :
- un module (601) de demande d'une information relative au mode d'affichage du code d'authentification affiché sur le dispositif électronique,
- un module (602) de réception de l'information relative à un mode d'affichage d'un code d'authentification du dispositif électronique,
- un module (603) de détermination de l'état prédéfini du dispositif électronique à partir de ladite information relative au mode d'affichage reçu, **caractérisé en ce que** le code d'authentification comprend une chaîne de caractères et chaque mode d'affichage est défini par au moins un paramètre choisi dans la liste de paramètres comprenant : souligné, barré, orienté selon une orientation choisie, coloré d'une couleur choisie, sur couleur de fond choisie, d'une police choisie, en italique, en gras.

8. Système selon la revendication 7, dans lequel le dispositif électronique est compris dans une carte à puce.

9. Système selon la revendication 7, dans lequel le dispositif électronique est compris dans un jeton d'authentification.

10. Ensemble de programmes d'ordinateur comportant des instructions pour l'exécution des étapes d'un procédé d'affichage et de gestion selon l'une quelconque des revendications 1 à 6, lorsque ledits programmes sont exécutés par des ordinateurs.

11. Support d'enregistrement lisible par un ordinateur sur lequel est enregistré un ensemble de programmes d'ordinateur comprenant des instructions pour l'exécution des étapes d'un procédé selon l'une quelconque des revendications 1 à 6.

## Patentansprüche

1. Verfahren, umfassend eine Anzeige eines Authentifizierungscodes, die von einer elektronischen Vorrichtung durchgeführt wird, und eine Verwaltung dieser elektronischen Vorrichtung, die von einem Server durchgeführt wird, wobei das Verfahren umfasst, durch die elektronische Vorrichtung:
- eine Erlangung (A1) des Authentifizierungscodes,
- eine Erfassung (A2) eines vordefinierten Zustands der elektronischen Vorrichtung,
- eine Auswahl (A3) eines Anzeigemodus des Authentifizierungscodes, der mit dem erfassten vordefinierten Zustand in Verbindung steht, aus mehreren Anzeigemodi, und
- eine Anzeige (A4) des Authentifizierungscodes gemäß dem ausgewählten Anzeigemodus mittels eines Anzeigemoduls der elektronischen Vorrichtung,
wobei das Verfahren ferner umfasst, durch den Server:
- eine Anforderung (C7) einer Information in Bezug auf den Anzeigemodus des Authentifizierungscodes, der auf der elektronischen Vorrichtung angezeigt wird,
- einen Empfang (C8) der Information in Bezug auf einen Anzeigemodus eines Authentifizierungscodes der elektronischen Vorrichtung,
- eine Bestimmung (C9) des vordefinierten Zustands der elektronischen Vorrichtung aus der empfangenen Information in Bezug auf den Anzeigemodus,
**dadurch gekennzeichnet, dass** der Authentifizierungscode eine Zeichenfolge umfasst und jeder Anzeigemodus durch mindestens einen Parameter definiert ist, der ausgewählt ist aus der Liste von Parametern umfassend: unterstrichen, durchgestrichen, gemäß einer ausgewählten Ausrichtung ausgerichtet, in einer ausgewählten Farbe eingefärbt, auf einer ausgewählten Hintergrundfarbe, mit einem ausgewählten Zeichensatz, in Kursivschrift, in Fettdruck.

2. Verfahren nach Anspruch 1, wobei mindestens ein vordefinierter Zustand angibt, dass die Vorrichtung dazu ausgestaltet ist, eine für den vordefinierten Zustand geeignete Anwendung zu nutzen.

3. Verfahren nach Anspruch 2, wobei ein Ereignis durch die elektronische Vorrichtung erfasst wird, das eine Auswahl einer für einen vordefinierten Zustand geeigneten Anwendung auslöst, wobei das Verfahren ferner durchgeführt wird, wenn das Ereignis erfasst wird.

4. Verfahren nach einem der Ansprüche 1 bis 3, wobei der Authentifizierungscode vor seiner Anzeige durch Anwendung auf einen aktuellen Authentifizierungscode einer vordefinierten Funktion, die mit dem vordefinierten Zustand in Verbindung steht, der erfasst wurde, durch die elektronische Vorrichtung erlangt wird.

5. Verfahren nach einem der Ansprüche 1 bis 4, ferner umfassend, durch den Server:
- eine Erlangung (C60) eines aktuellen Authentifizierungscodes der elektronischen Vorrichtung,
- einen Empfang (C6) eines Authentifizierungscodes, der von einem Nutzer eingegeben wird,
- einen Vergleich (C61) des aktuellen Authentifizierungscodes mit dem Authentifizierungscode, der von einem Nutzer eingegeben wird.

6. Verfahren nach Anspruch 5, ferner umfassend eine zusätzliche Bestimmung (C62) des vordefinierten Zustands der elektronischen Vorrichtung durch den Server, ob der eingegebene Authentifizierungscode durch eine Anwendung auf den aktuellen Authentifizierungscode einer vordefinierten Funktion, die mit dem vordefinierten Zustand in Verbindung steht, erlangt werden kann oder ob der aktuelle Authentifizierungscode mit dem empfangenen eingegebenen Authentifizierungscode identisch ist.

7. System, umfassend eine elektronische Vorrichtung (200), die dazu ausgestaltet ist, Authentifizierungscodes anzuzeigen, und einen Server, wobei die elektronische Vorrichtung umfasst:
- ein Modul (202, 204A) zur Erlangung eines Authentifizierungscodes,
- ein Modul (202, 204B) zur Erfassung eines vordefinierten Zustands der elektronischen Vorrichtung,
- ein Modul (202, 204C) zur Auswahl eines Anzeigemodus des Authentifizierungscodes, der mit dem erfassten vordefinierten Zustand in Verbindung steht, aus mehreren Anzeigemodi, und
- ein Modul (202, 204D) zur Anzeige des Authentifizierungscodes gemäß dem ausgewählten Anzeigemodus,
wobei der Server umfasst:
- ein Modul (601) zur Anforderung einer Information in Bezug auf den Anzeigemodus des Authentifizierungscodes, der auf der elektronischen Vorrichtung angezeigt wird,
- ein Modul (602) zum Empfang der Information in Bezug auf einen Anzeigemodus eines Authentifizierungscodes der elektronischen Vorrichtung,
- ein Modul (603) zur Bestimmung des vordefinierten Zustands der elektronischen Vorrichtung aus der empfangenen Information in Bezug auf den Anzeigemodus,
**dadurch gekennzeichnet, dass** der Authentifizierungscode eine Zeichenfolge umfasst und jeder Anzeigemodus durch mindestens einen Parameter definiert ist, der ausgewählt ist aus der Liste von Parametern umfassend: unterstrichen, durchgestrichen, gemäß einer ausgewählten Ausrichtung ausgerichtet, in einer ausgewählten Farbe eingefärbt, auf einer ausgewählten Hintergrundfarbe, mit einem ausgewählten Zeichensatz, in Kursivschrift, in Fettdruck.

8. System nach Anspruch 7, wobei die elektronische Vorrichtung in einer Chipkarte enthalten ist.

9. System nach Anspruch 7, wobei die elektronische Vorrichtung in einem Authentifizierungstoken enthalten ist.

10. Computerprogrammpaket, umfassend Anweisungen zur Ausführung von Schritten eines Anzeige- und Verwaltungsverfahrens nach einem der Ansprüche 1 bis 6, wenn die Programme von Computern ausgeführt werden.

11. Durch einen Computer lesbares Aufzeichnungsmedium, auf dem ein Computerprogrammpaket aufgezeichnet ist, umfassend Anweisungen zur Ausführung von Schritten eines Verfahrens nach einem der Ansprüche 1 bis 6.

## Claims

1. A method comprising a display of an authentication code, implemented by an electronic device, and a management of this electronic device, implemented by a server, the method comprising, by the electronic device:
- obtaining (A1) said authentication code,
- detecting (A2) a predefined state of the electronic device,
- selecting (A3) among several display modes, a display mode for the authentication code associated with the detected predefined state, and
- displaying (A4) the authentication code according to the selected display mode by means of a display module of the electronic device,
the method further comprising, by the server:
- requesting (C7) for information relating to the display mode for the authentication code displayed on the electronic device,
- receiving (C8) the information relating to a display mode for an authentication code of the electronic device,
- determining (C9) the predefined state of the electronic device from said information relating to the received display mode,
**characterized in that** the authentication code comprises a string of characters and each display mode is defined by at least one parameter chosen from the list of parameters comprising: underlined, strikethrough, oriented according to a chosen orientation, colored with a chosen color, on a chosen background color, with a chosen font, in italics, in bold.

2. The method according to claim 1, wherein at least one predefined state indicates that the device is configured to use an application specific to the predefined state.

3. The method according to claim 2, wherein an event triggering a selection of an application specific to a predefined state is detected by the electronic device, the method being further implemented when said event is detected.

4. The method according to any one of claims 1 to 3, wherein prior to its display, the authentication code is obtained by the electronic device by application to a current authentication code of a predefined function associated with the predefined state that has been detected.

5. The method according to any one of claims 1 to 4, further comprising, by the server:
- obtaining (C60) a current authentication code of the electronic device,
- receiving (C6) an authentication code entered by a user,
- comparing (C61) the current authentication code with the authentication code entered by a user.

6. The method according to claim 5, further comprising additionally determining (C62), by the server, the predefined state of the electronic device, if the entered authentication code can be obtained by an application, to the current authentication code, of a predefined function associated with the predefined state, or if the current authentication code is identical to the entered authentication code received.

7. A system comprising an electronic device (200) configured to display authentication codes, and a server, the electronic device comprising:
- a module (202, 204A) for obtaining an authentication code,
- a module (202, 204B) for detecting a predefined state of the electronic device,
- a module (202, 204C) for selecting among several display modes, a display mode for the authentication code associated with the detected predefined state, and
- a module (202, 204D) for displaying the authentication code according to the selected display mode,
the server comprising:
- a module (601) for requesting information relating to the display mode for the authentication code displayed on the electronic device,
- a module (602) for receiving the information relating to a display mode for an authentication code of the electronic device,
- a module (603) for determining the predefined state of the electronic device from said information relating to the received display mode,
**characterized in that** the authentication code comprises a string of characters and each display mode is defined by at least one parameter chosen from the list of parameters comprising: underlined, strikethrough, oriented according to a chosen orientation, colored with a chosen color, on a chosen background color, with a chosen font, in italics, in bold.

8. The system according to claim 7, wherein the electronic device is comprised in a smart card.

9. The system according to claim 7, wherein the electronic device is comprised in an authentication token.

10. A set of computer programs including instructions for executing the steps of a display and management method according to any one of claims 1 to 6, when said programs are executed by computers.

11. A recording medium readable by a computer on which is recorded a set of computer programs comprising instructions for executing the steps of a method according to any one of claims 1 to 6.
